# EUROPEAN PATENT SPECIFICATION

(11) **EP 2 641 360 B1**
(45) Date of publication and mention of the grant of the patent: **21.03.2018**
(21) Application number: 11841306.1
(22) Date of filing: 21.11.2011
(51) Int. Cl.: H04L 12/28, H04L 12/70, H04L 12/721, H04L 12/741, H04L 12/773, H04L 12/947, H04L 12/709

(54) **METHODS, SYSTEMS, AND COMPUTER READABLE MEDIA FOR NEXT HOP SCALING WITH LINK AGGREGATION**
VERFAHREN, SYSTEME UND COMPUTERLESBARE MEDIEN FÜR NEXT-HOP-SKALIERUNG MIT VERBINDUNGSAGGREGATION
PROCÉDÉS, SYSTÈMES ET SUPPORTS LISIBLES PAR ORDINATEUR POUR MISE À L'ÉCHELLE DU SAUT SUIVANT AVEC AGRÉGATION DES LIENS

(30) Priority: 19.11.2010 US 415643 P; 19.11.2010 US 950587; 17.12.2010 US 972391
(43) Date of publication of application: 25.09.2013
(73) Proprietor: Extreme Networks, Inc., San Jose, CA 95119 (US)
(72) Inventor: GROSSER, Donald, B., Apex NC 27523 (US); ROVNER, Edward, J., Chapel Hill NC 27516 (US)
(74) Representative: Regimbeau
(86) International application number: PCT/US2011/061690
(87) International publication number: WO 2012/068579

(56) References cited:
- US-A1- 2006 039 385
- US-A1- 2007 268 915
- US-A1- 2008 240 133
- US-A1- 2008 240 133
- US-A1- 2010 128 729
- US-B1- 6 192 051
- US-B1- 7 190 696

## Description

### TECHNICAL FIELD

The subject matter described herein relates to packet forwarding devices. More particularly, the subject matter described herein relates to packet forwarding devices with improved next hop scaling with link aggregation.

### BACKGROUND

Document US 7 190 696 B1 concerns a network-processor device, which comprises a packet-processor for an ingress port that is operative to distribute data flows to a plurality of equal-cost paths for transfer of data toward a given destination. The packet-processor also includes further distribution circuitry for designating a link of a link aggregation by which to channel the data between routers within a part of a selected path.

Document US 2006/039385 A1 relates to a method of routing a packet by way of a router aggregation. A packet is received from outside the aggregation by an initially receiving router/switch unit. Router functions are performed by the initially receiving router unit, including modification of the packet. The packet is then sent to a layer 2 network of the aggregation, wherein switching functions are performed on the packet.

Document US 6 192 051 B1 relates to a network routing apparatus, which employs multi-level tree data structures in a centralized routing table and in distributed forwarding tables.

Document US 2008/240133 A1 relates to a communication device, which has link aggregation management tables, one for each of a plurality of line cards, each of the link aggregation management tables managing a relation between a link aggregation group and ports belonging thereto.

Address resolution protocol (ARP) is the protocol by which bindings between IP addresses and MAC addresses are communicated between devices. When a device needs to send an IP packet to another device, the sending device must first determine the MAC address corresponding to IP address of the next hop (next machine in the path to the destination or the destination itself, if the next machine is the destination). The sending device can use ARP to determine the next hop MAC address. The sending machine broadcasts an ARP request with the next hop IP address to all machines within a particular domain, and the machine whose IP address is contained in the ARP request responds with the machine's MAC address. Once the sending machine obtains the next hop MAC address, the sending machine stores the binding between the IP address and the MAC address in memory so that the binding can be used for forwarding subsequent packets to the same machine.

In some packet forwarding architectures, the lookup used to determine the next hop information for a received packet is performed solely by the ingress packet processor, i.e., the packet processor associated with the port of a packet forwarding device on which the packet is received. The ingress packet processor performs a layer 3 route lookup based on the IP address in the received packet to identify not only the destination port in the packet forwarding device for the packet, but also the destination MAC address for the packet. Using such an ingress lookup architecture designed for full-mesh traffic, because a packet destined for a particular host may arrive on any port of the packet forwarding device, the memory associated with each packet processor must store a complete set of ARP bindings for all of the hosts connected to the packet forwarding device.

Because the memory accessible by each packet processor is typically limited, the number of hosts that can be connected to a packet forwarding device can be limited by the memory available to a single packet processor, which greatly limits the scalability of the packet forwarding device. For example, in a packet forwarding architecture where each packet processor has a fixed amount of memory for storing ARP bindings, the maximum number of ARP table entries is limited by the amount of memory of a single packet processor, because each packet processor must store the same complete set of ARP bindings. Stated differently, the requirement that each packet processor store the same complete set of ARP bindings reduces the scalability of the system by a factor of 1/(# of packet processors). Adding packet processors does not increase the number of hosts that the packet forwarding device can serve once the maximum number of ARP table entries, which is limited by the ARP binding storage space available to a single packet processor, is reached. Such a limitation is undesirable, especially when there is a need for the packet forwarding device to serve large numbers of connected hosts.

One particular network configuration for which it is desirable to have a packet forwarding device serve large numbers of connected hosts occurs when virtualization is used. In a virtualization environment, a single physical host may be configured with many virtual hosts. Each virtual host has its own separate operating system, network address, and MAC address. Each virtual host would require an ARP binding in a packet forwarding device. Thus, connecting many physical hosts to the packet forwarding device, where each of the physical hosts includes plural virtual hosts further increases the need for scalable packet forwarding device architectures.

Accordingly, in light of these difficulties, there exists a need for methods, systems, and computer readable media for next hop scaling. In addition, however, although improved next hop scaling could help customers with large data centers using server virtualization or large layer 2 forwarding domains, those same customers often also heavily depend on link aggregation (also known as port load sharing) for resilience and load balancing. A link aggregation group (LAG) may consist of a plurality of physical ports that behave as a group. Customers have two expectations for LAG behavior that must be addressed within any distributed IP next hop scaling method that may be developed: (1) Packets to a particular MAC address (and network address) from multiple sources (or to multiple addressees from a single source) may utilize all active ports in a LAG for load balancing; and (2) The network adapts quickly when a port in the LAG goes down or up, to achieve expectation (1).

Accordingly, for any methods and systems for next hop scaling that are developed, it can be desirable that such developments do not impede the ability of such methods and systems to incorporate link aggregation.

### SUMMARY

A first subject matter of the invention is a system for next hop scaling with link aggregation according to claim 1. Claims 2 to 6 concern embodiments of the system for next hop scaling with link aggregation.

A second subject matter of the invention is a method for next hop scaling according to claim 7. Claims 8 to 11 concern embodiments of the method for next hop scaling.

A third subject matter of the invention is a computer readable medium according to claim 12.

According to one aspect of the subject matter described herein, a system for next hop scaling is provided. The system includes a packet forwarding device including a plurality of packet processors for performing next hop and link aggregation group (LAG) selection operations. Within this plurality of packet processors, ingress packet processors are configured to perform the next hop and LAG member selection operations for packets that arrive from external ports of the packet forwarding device. The ingress packet processors are further configured to indicate, for received packets that have a next hop on a different packet processor, that an egress next hop selection operation is needed. Egress packet processors of the plurality of packet processors are configured to perform the egress next hop and member selection operations for the packets for which an egress next hop selection operation is indicated, wherein forwarding of the packets is limited to active LAG group members local to the egress packet processor.

The subject matter described herein for next hop scaling with link aggregation can be implemented using a non-transitory computer readable medium having stored thereon executable instructions that when executed by the processor of a computer control the computer to perform steps. Exemplary computer readable media for implementing the subject matter described herein may include chip memory devices, disk memory devices, programmable logical devices, and application specific integrated circuits. In addition, a computer readable medium that implements the subject matter described herein may be located on a single device or computing platform or may be distributed across plural devices or computing platforms.

### BRIEF DESCRIPTION OF THE DRAWINGS

Preferred embodiments of the subject matter described herein will now be described with reference to the accompanying drawings of which:
Figure 1 is a block diagram of a packet forwarding device according to an embodiment of the subject matter described herein;
Figure 2 is a block diagram illustrating tables in a packet forwarding device without modified link aggregation;
Figure 3 is a block diagram of a packet forwarding device with modified link aggregation according to an embodiment of the subject matter described herein; and
Figure 4 is a flow chart illustrating an exemplary method for next hop scaling with link aggregation according to an embodiment of the subject matter described herein.

### DETAILED DESCRIPTION

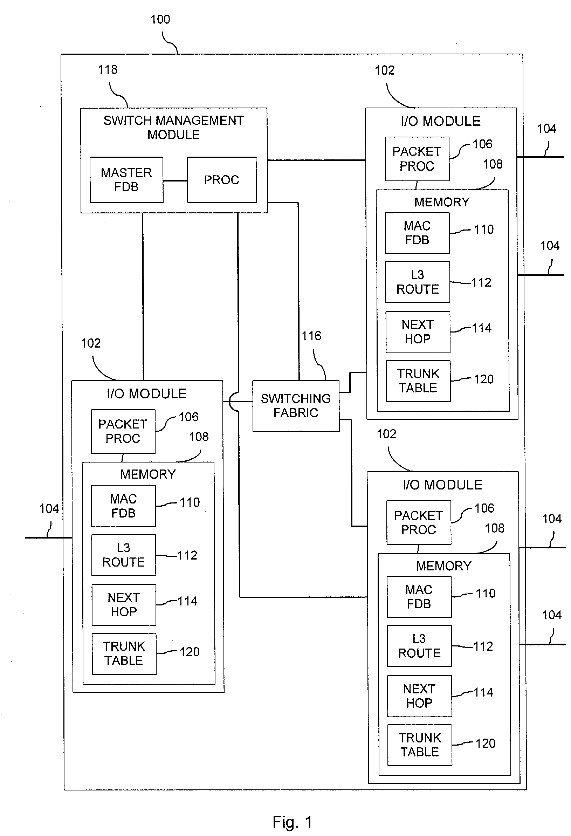

The subject matter described herein includes methods, systems, and computer readable media for next hop scaling with link aggregation. Figure 1 is a block diagram illustrating an exemplary packet forwarding device for implementing next hop scaling with link aggregation according to an embodiment of the subject matter described herein. Referring to Figure 1, packet forwarding device 100 may have layer 2 switching and layer 3 packet forwarding capabilities, where layers 2 and 3 refer to the corresponding layers in the OSI protocol stack. Packet forwarding device 100 includes a plurality of input/output (I/O) modules 102, each having at least one port 104 for communicating packets to and receiving packets from connected hosts, such as servers, personal computers, routers, etc. Each I/O module 102 includes a packet processor 106 and memory 108. Each packet processor 106 performs packet forwarding operations using packet forwarding information stored in its respective memory 108. In the illustrated example, each memory 108 includes a MAC forwarding database 110 for storing layer 2 packet forwarding information, a layer 3 longest prefix match or host route table 112 for storing layer 3 packet forwarding information, a next hop table 114 for storing egress port, MAC address, and VLAN information, and a trunk table 120 for storing LAG information, including egress slot and port information for LAG groups.

The combination of layer 3 route table 112 and next hop table 114 stores next hop bindings (e.g., ARP bindings). For example, a lookup is performed in layer 3 route table 112 to determine a next hop identifier or index corresponding to the destination IP address in a received packet. The next hop identifier or index is used to perform a lookup in next hop table 114, which can store the MAC address and VLAN information corresponding to the destination IP address. Alternatively, if the destination IP address is connected to a LAG, the lookup in next hop table 114 can result in an index to trunk table 120. Trunk table 120 includes entries corresponding to a LAG group, where an entry corresponding to a LAG group includes egress slot and port information for LAG group members. Each packet processor 106 may select among LAG group members using a hash algorithm based on packet parameter values and may forward the packet to the packet processor associated with the egress slot and port. Because of the use of distributed ARP scaling, however, a packet forwarding lookup may also be performed by the egress packet processor, and the hash algorithm of the egress packet process to select among LAG group members may not be identical to the hash algorithm on the ingress packet processor, a boomerang effect may occur where the packet is forwarded among multiple packet processors. As will be described in more detail below, the subject matter described herein avoids such a boomerang effect when selecting among LAG group members, even when ingress and egress packet forwarding lookups for distributed ARP scaling are performed.

In addition to I/O modules 102, packet forwarding device 100 includes a switch fabric 116 that is responsible for forwarding packets between I/O modules 102 and between I/O modules 102 and switch management module 118. Switch management module 118 controls the overall operation of packet forwarding device 100. In addition, switch management module 118 may participate in IP routing protocols to populate layer 3 route tables 110 and may perform slowpath forwarding lookups for packets for which entries are not populated in layer 3 route tables 112.

### Distributed ARP Scaling

Using distributed ARP scaling, the ARP bindings may be distributed across packet processors so that ARP bindings for hosts are stored only in the next hop tables of the packet processors to which the hosts are connected. Entries in a packet processor's next hop table for other hosts that are not connected to the packet processor can be indicated as relay entries in the next hop table used by the packet processor. If a packet received from an external port by a packet processor (hereinafter, the ingress packet processor) results in a match to a relay entry in the next hop table, the packet will be forwarded unmodified to the packet processor associated with the egress port (hereinafter, the egress packet processor). The egress packet processor will perform a lookup in its L3 route table and next hop table, determine the MAC address for the packet, replace the MAC address in the packet, and forward the packet from packet forwarding device 100.

For instance, next hop tables 114 on different I/O modules 102 can be configured to contain different next hop information. For example, a given next hop table 114 can store a MAC address for a host that is connected to the packet processor associated with that next hop table 114 but does not contain MAC addresses for hosts connected to other packet processors. Rather, the selected next hop table 114 contains relay entries for hosts connected to other packet processors, with the destination port identifying a "hybrid" port on the egress I/O module that was a previously unused port. The hybrid port may be any port that is not used for packet forwarding.

When the egress packet processor receives a packet that has been relayed by an ingress packet processor, the packet will include a fabric header that indicates the destination port. The fabric header is inserted on the packet by the ingress packet processor so that the switch fabric will be able to direct the packet to the correct egress packet processor. If the fabric header egress port parameter indicates a hybrid port, such a parameter will trigger the egress packet processor to perform a lookup in its L3 route table and next hop table to determine the MAC address for the packet and the egress port for the packet. The egress packet processor will then replace the MAC address in the packet and forward the packet from packet forwarding device 100.

It should be noted that the next hop table associated with each packet processor is required to store only a single relay entry for each additional packet processor in the system, regardless of number of hosts connected to the other packet processors, which greatly reduces the amount of data that must be stored by each packet processor for hosts connected to other packet processors. It should also be noted that L3 route tables 112 associated with each packet processor differ from each other to account for the differences in the corresponding next hop tables.

Because packet forwarding device 100 can be configured to include distributed storage of ARP bindings, rather than being limited to the storage available by a single packet processor for storing ARP bindings, the number of hosts to which packet forwarding device 100 can be connected is limited by the total of the memory available for ARP bindings across all of the packet processors. Thus, in contrast to typical configurations, such a configuration can provide a substantial increase in scalability. In addition, because each packet processor is responsible for full ARP bindings for directly connected hosts, the number of hosts that can be served by packet forwarding device 100 is scalable with the number of packet processors. As a result, the connectivity of packet forwarding device 100 can be increased by adding additional packet processors.

Thus, using distributed storage of ARP bindings combined with relay entries on egress packet processors and egress next hop lookups, improved ARP scaling is achieved. A packet forwarding device with ARP scaling as described herein can be used to greatly increase the number of physical and/or virtual hosts that can be served by the packet forwarding device. For example, because the storage of next hop bindings is distributed across the packet processors, the number of hosts that can be served is limited by the total memory storage space across all of the packet processors, rather than being limited to the memory storage of a single packet processor. For example, if a given packet forwarding device has four packet processors, the packet forwarding device can accommodate a distributed next hop table with a number of entries that can be stored in the combined storage space of the four packet processors. The total number of next hop entries that can be stored would not be exactly equal to four times that of one of the packet processors, as the relay entries occupy some space on the ingress packet processors. In addition, hosts may not be evenly distributed among the packet processors. The subject matter described herein thus makes the packet forwarding device more scalable, as adding additional packet processors allows more hosts to be served with a decreased likelihood of reaching the maximum number of next hop table entries.

### Distributed ARP Scaling with LAG

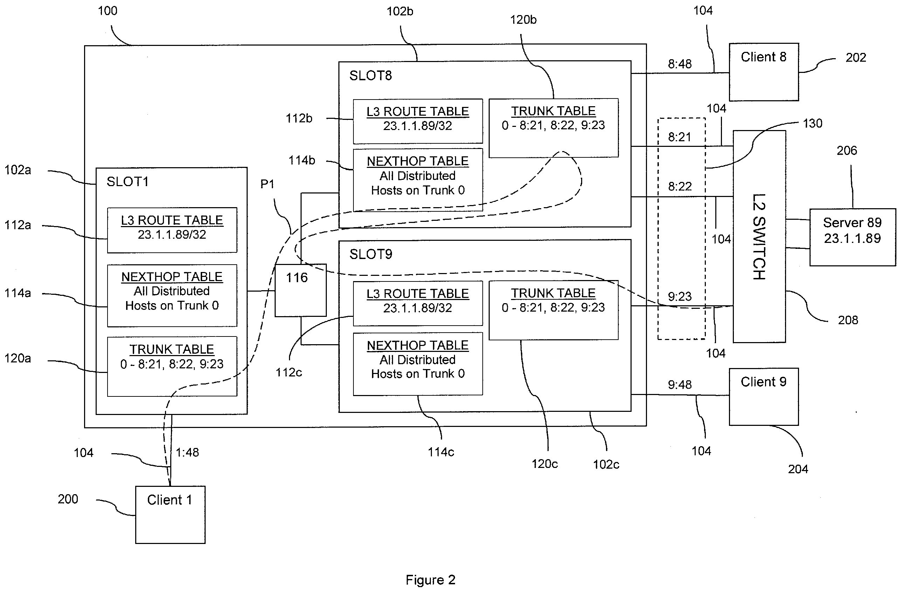

As noted above, however, it would be further desirable to incorporate such improved ARP scaling into a system that also provides link aggregation for resilience and load balancing. Adding link aggregation can mean that even if a packet received from an external port by a packet processor results in a match to a relay entry in the next hop table, if the relay entry is associated with a LAG, a LAG member selection operation must still be performed. Figure 2 is a more detailed diagram of packet forwarding device 100 showing exemplary configurations of layer 3 route table 112, next hop table 114, and trunk table 120 for use in a link aggregation configuration. The remaining components illustrated in Figure 1 are omitted from Figure 2 for simplicity. In Figure 2, I/O modules 102 are associated with different card slots in packet forwarding device 100. In the illustrated configuration, a single I/O module is associated with slotl, a single I/O module is associated with slot8, and a single I/O module is associated with slot9. It is also assumed for purposes of this example, that each I/O module includes a single packet processor. However, using plural packet processors per I/O module and/or slot is intended to be within the scope of the subject matter described herein.

In the illustrated example, each port 104 has an associated port number and a slot number. For example, 1 :48 indicates slotl, port48, 8:21 indicates slot8, port21, etc. Slot1 :port48 is connected to a host 200, slot8:port1 is connected to a host 202, and slot9:port48 is connected to a host 204. Similarly, the remaining ports of packet forwarding device 100 are together connected as a LAG 130 to a host 206 with the IP address/MAC address combinations shown in Figure 2. Specifically, slot8:port21, slot8:port22, and slot9:port23 are each connected to host 206 via a L2 switch 208. Hosts 200, 202, 204, and 206 can be physical devices or a combination of physical and virtual devices. For example, hosts 200, 202, 204, and 206 may be servers, client computers, routers, etc., with or without virtualization software.

As shown in Figure 2, LAG member selection is accomplished by referring all next hops intended for a host associated with LAG 130 (e.g., host 206 in Figure 2) to an entry of a trunk table 120 on each of I/O modules 102. Specifically, for example, entry 0 of each trunk table 120 contains a list of each port 104 that is a member of LAG 130. It should be noted that the entries in trunk tables 120 associated with each I/O module 102 and packet processor in this configuration are identical, with each trunk table 120 containing entries for all of the ports that are members of LAG 130 connected to packet forwarding device 100, irrespective of the physical ports to which the members are connected.

Without distributed IP ARP scaling, the ingress packet processor uses a hash on packet parameters to select an egress port from among the ports in LAG 130, and no ARP or LAG lookup is performed by the egress packet processor. When distributed ARP scaling is implemented as described above, however, both the ingress packet processor and egress packet processor have a role in forwarding packets. Because there are two separate packet processors involved, using a traditional hash-based LAG decision at both packet processors may present the above-mentioned boomerang problem. As an example, referring to Figure 2, a packet from host 200 can be intended for transmission to host 206. If standard LAG behavior were employed, the ingress packet processor (packet processor on I/O module 102a on slot1) might hash on a packet and choose the egress port 8:21 on slot8. The egress packet processor (packet processor on I/O module 102b on slot8) then does an L3 lookup to forward the packet and hashes again. If the hash algorithm between packet processors associated with I/O modules 102a and 102b are not identical, this second hash could choose the egress port on yet a different slot, such as port 9:23 on slot9, provided that the new egress port is also part of LAG 130. This "boomerang effect" (illustrated by the dashed line identified as path P1 in Figure 2) of the packet visiting an intermediate packet processor (e.g., packet processor on I/O module 102b on slot8) before egressing a final processor (e.g., packet processor on I/O module 102c on slot9) over-utilizes switch backplane bandwidth, and is therefore not desirable.

To avoid such an effect, one option can be to pre-program the trunk tables with a unique egress port for each unique IP destination to perform a kind of quasi load balancing. This configuration would avoid the "boomerang effect", but it would not allow for optimal load sharing to one server because all packets from all ports on one ingress packet processor destined to one host would egress the same port every time. Such an approach would also require maintaining a list of hosts associated with each egress port on a LAG, and would thus require potentially tens of thousands of trunk table updates whenever a LAG port goes up or down, or to rebalance the hosts whenever a port is added or deleted on a LAG. This arrangement would not provide quick reaction to LAG changes.

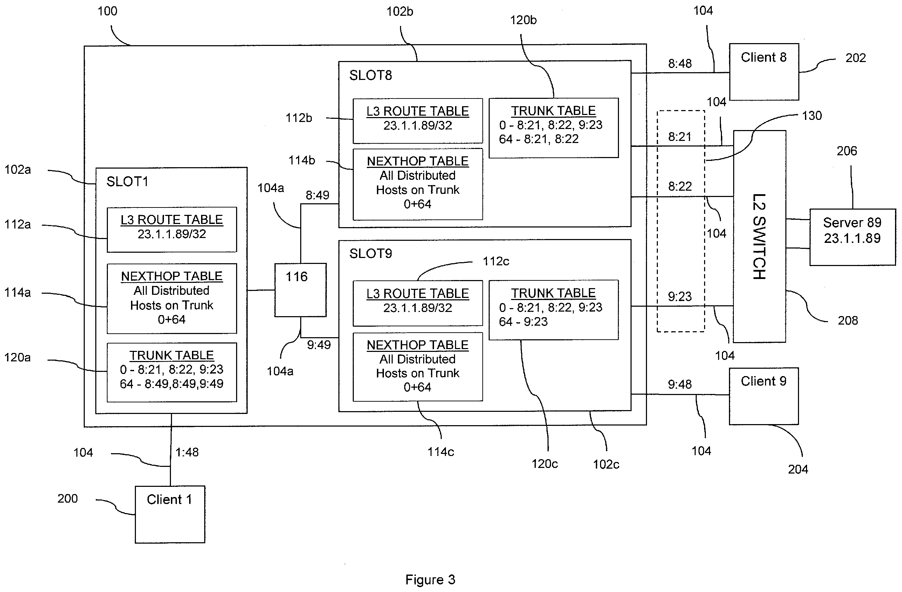

Alternatively, the system can be configured to maintain dual LAG spaces in the trunk tables as shown in Figure 3. For each LAG group configured by the user with front panel ports, a separate special LAG group can be automatically reserved and maintained. This special LAG group can contain front panel ports 104 or packet processor "hybrid ports" 104a. The special LAG group can be quickly updated whenever updates are made to the front panel LAG group. If no LAG ports are active on the local packet processor, the special LAG can be configured to contain the hybrid port numbers corresponding to each egress port. If some LAG port is active on the local packet processor, however, the special LAG can be configured to contain only the local active front panel port numbers. This configuration halves the maximum number of LAG groups (e.g., from 128 to 64), but fulfills the two customer expectations of load sharing packets to distributed IP ARP entries, and of quickly reacting to changes in the LAG. It is noted that only distributed IP next hop host entries utilize the special LAG groups. Other forwarding database entries, such as layer-2 MAC entries or multicast entries, can use the "normal" LAG groups and are unaffected by this method.

Regarding the specific implementation of the special LAG groups, Figure 3 illustrates that in addition to each trunk table 120 having a primary entry (e.g., entry 0) containing the members of a given LAG, each trunk table 120 can further have a supplementary entry (e.g., entry 64) associated with the corresponding special LAG. Much like different next hop tables 114 can be different for each I/O module 102, the supplementary entries of each trunk table 120 can be different to reflect differences in which members of a given LAG are preferred egress ports for packets forwarded from a given I/O module 102. In particular, the supplementary entries of each trunk table 120 can list only a preferred subset of the ports that are members of the LAG.

For instance, in the arrangement shown in Figure 3, packets from host 200 on port 1 :48 to host 206 will be distributed across those ports that are members of the LAG (e.g., 8:21, 8:22, and 9:23), as expected. If any of those ports were to go down, packets would be distributed across the remaining active ports. In addition, rather than listing each of the ports precisely, the supplementary entry of trunk table 120 can list the hybrid port numbers corresponding to each of the members of the LAG. For example, because none of the active ports in the LAG are local to host 200, the supplementary entry of trunk table 120a contains only the hybrid port numbers corresponding to the egress ports (e.g., 8:49 and 9:49). In this way, the ingress packet processor needs only to identify an appropriate egress packet processor rather than selecting a precise egress port.

Further, where multiple members of a LAG are contained on a single I/O module, multiple instances of the corresponding hybrid port number can be listed in the supplementary entry of trunk table 120a to maintain an equal distribution of packets forwarded to each member of the LAG. For example, entry 64 of trunk table 120a can contain two instances of hybrid port number 8:49 since that hybrid port number is associated with both of egress ports 8:21 and 8:22. As a result, twice as many packets will tend to be forwarded to I/O module 102b compared to I/O module 102c in accordance with the two-to-one ratio of potential egress ports associated with each respective module.

In contrast, for packets from host 202 on port 8:1 to host 206, it is preferred that only local ports on the same packet processor will be selected (i.e., 8:21 and 8:22). Accordingly, non-local ports (i.e., 9:23) are omitted from the supplementary entry of trunk table 120b. Similarly, it can be preferred that packets directed from host 204 on port 9:48 to host 206 will always egress the local port (i.e., 9:23). Only if port 9:23 were to go down would packets from host 204 to host 206 be distributed across ports 8:21 and 8:22 because no local ports remain active on that packet processor.

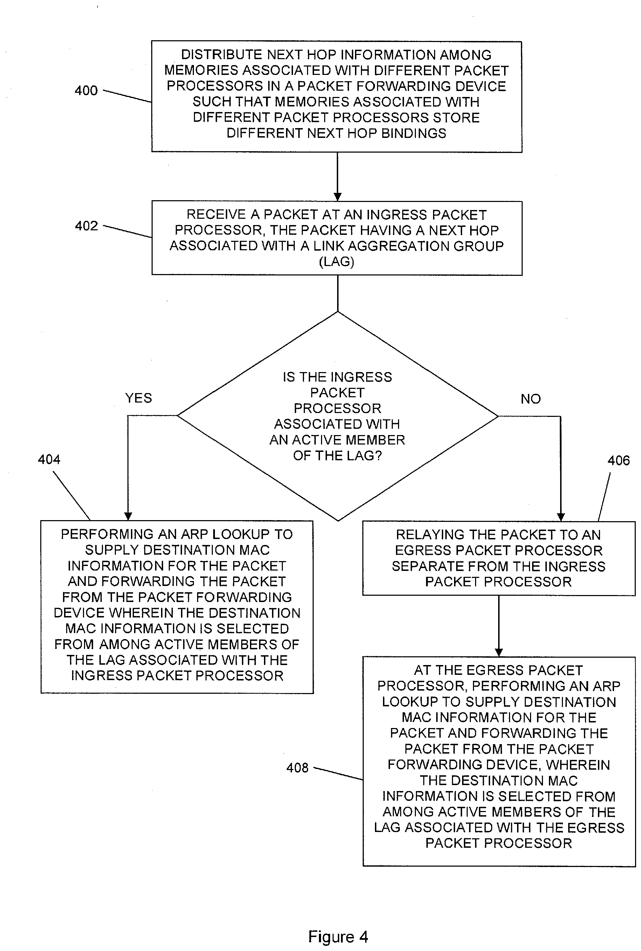

Figure 4 is a flow chart illustrating an exemplary process for next hop scaling with link aggregation according to an embodiment of the subject matter described herein. Referring to Figure 4, in step 400, next hop information is distributed among memories associated with different packet processors in a packet forwarding device such that memories associated with different packet processors store different next hop bindings. For example, as illustrated in Figure 3, the next hop table associated with each packet processor (or the trunk table referenced by the packet processor) may store full MAC addresses for directly connected hosts and may store relay entries for hosts that are connected to other packet processors.

In step 402, a packet is received at an ingress packet processor. The packet has a next hop associated with a LAG. For example, referring again to Figure 3, a packet received at slot1 :port48 may have a destination IP address 23.1.1.89, which has a next hop which corresponds to the LAG connected to both of I/O modules 102b and 102c.

Returning to Figure 4, in step 404, for an ingress packet processor associated with an active port member of the LAG, an ARP lookup is performed to determine the destination MAC address, and the packet is forwarded from the packet forwarding device. Specifically, the destination MAC address is selected from among members of the LAG associated with the ingress packet processor.

Returning to Figure 4, in step 406, for an ingress packet processor that is not associated with an active port member of the LAG, the packet is first relayed to the egress packet processor. Continuing with the present example, for the packet addressed to 23.1..89 that arrives at slot1 :port48, a LAG member selection operation will choose one of the hybrid port numbers listed in the supplementary entry to trunk table 120a and will be forwarded to either the slot8 packet processor or the slot9 packet processor based on this choice. The relayed packet will have a previously unused port number (i.e., a hybrid port) in its fabric header.

Returning to Figure 4, in step 408, at the egress packet processor, the packet is received, the hybrid port address in the fabric header triggers an ARP lookup to determine the destination MAC address and the packet is forwarded from the packet forwarding device. Specifically, the destination MAC address is selected from among members of the LAG associated with the egress packet processor. Continuing the present example, if a packet addressed to 23.1.1.89 is forwarded to slot8, a second LAG member selection operation will choose from among slot8:port21 or slot8:port22 listed in the supplementary entry to trunk table 120b. The MAC address and VLAN tag in the packet will be replaced with the MAC address and VLAN tag corresponding to the chosen egress port. The packet will be forwarded from packet forwarding device 100 using the selected port.

Although the subject matter described above relates to distributed ARP scaling, the subject matter described herein is not limited to ARP scaling and can be applied to any type of next hop scaling without departing from the scope of the subject matter described herein. For example, the subject matter described herein can be used for distributed storage of neighbor discovery bindings (the ARP equivalent for IPv6) without departing from the scope of the subject matter described herein.

It will be understood that various details of the presently disclosed subject matter may be changed without departing from the scope of the presently disclosed subject matter. Furthermore, the foregoing description is for the purpose of illustration only, and not for the purpose of limitation.

## Claims

1. A system for next hop scaling with link aggregation, the system comprising a packet forwarding device (100) including:
an ingress packet processor (102a) configured to:
perform link aggregation group member selection operation for packets that arrive from external ports of the packet forwarding device (100) having a next hop associated with a link aggregation group,
indicate, for packets that have a next hop on a different packet processor, that an egress next hop selection operation is needed, and
relay the indicated packets to an egress packet processor (102b);
the egress packet processor (102b) configured to:
for the packets for which the egress next hop selection operation is indicated, perform the egress next hop and a further link aggregation group member selection operations, and
limit, via the further link aggregation group member selection operation, forwarding of the packets that arrive from the external ports of the forwarding device (100) to an active link aggregation group member local to the egress packet processor (102b); and
memory (108) associated with each ingress or egress packet processor (102a, 102b) configured to store relay entries for next hops connected to a plurality of other packet processors.

2. The system of claim 1, wherein the memory (108) associated with each ingress or egress packet processor (102a, 102b) is further configured to store a single relay entry for each of the plurality of other packet processors.

3. The system of claim 1, wherein receipt of a packet that matches a relay entry stored in a memory (108) associated with the ingress packet processor (102a) triggers the egress packet processor (102a) to perform an egress next hop lookup.

4. The system of claim 1, wherein the relay entries do not store MAC addresses for hosts connected to the plurality of other packet processors.

5. The system of claim 1 wherein the memory (108) associated with each ingress or egress packet processor (102a, 12b) is further configured to store MAC addresses only for next hops that are directly connected to the ingress or egress packet processor (102a, 12b), such that next hop bindings for all hosts are distributed among memories associated with all packet processors.

6. The system of claim 1 wherein the memory associated with each ingress or egress packet processor (102a, 12b) stores next hop bindings for real and virtual hosts (200, 202, 204, 206).

7. A method for next hop scaling, the method comprising the steps of :
distributing next hop information among memories associated with different packet processors in a packet forwarding device (100) including an ingress packet processor (102a) and an egress packet processor (102b), such that the memories associated with the different packet processors store different next hop bindings;
receiving packets at the ingress packet processor (102a), the packets having a next hop associated with a link aggregation group;
performing a link aggregation group member selection operation for the packets that arrive from external ports of the packet forwarding device (100);
for packets that have a next hop on a different packet processor, indicating that an egress next hop selection operation is needed and relaying the indicated packets to an egress packet processor (102b);
for the packets for which the egress next hop selection operation is indicated, performing the egress next hop and a further link aggregation group member selection operations, wherein the further link aggregation group member selection operation limits forwarding of the packets that arrive from the external ports of the forwarding device (100) to an active link aggregation group member local to the egress packet processor (102b); and
storing, in a memory (108) associated with each ingress or egress packet processor (102a, 102b), relay entries for next hops connected to a plurality of other packet processors.

8. The method of claim 7, further comprising the step of :
storing, in the memory (108) associated with each ingress or egress packet processor (102a, 102b), a single relay entry for each of the plurality of other packet processors.

9. The method of claim 7, further comprising the steps of :
receiving a packet that matches a relay entry stored in a memory (108) associated with the ingress packet processor (102a); and
in response to receiving the packet, performing, at the egress packet processor (102b), an egress next hop lookup.

10. The method of claim 8, wherein the relay entries do not store MAC addresses for hosts connected to the plurality of other packet processors.

11. The method of claim 7 wherein the memory (108) associated with each ingress or egress packet processor (102a, 102b) stores MAC addresses only for next hops that are directly connected to the ingress or egress packet processor (102a, 102b) such that next hop bindings for all hosts are distributed among memories associated with all packet processors.

12. A computer readable medium having stored thereon executable instructions that, when executed by a processor of a computer, control the computer to perform steps comprising:
receiving packets at an ingress packet processor (102a), the packets having a next hop associated with a link aggregation group;
performing a link aggregation group member selection operation for the packets that arrive from external ports of the packet forwarding device (100);
for packets that have a next hop on a different packet processor, indicating that an egress next hop selection operation is needed and relaying the indicated packets to an egress packet processor (102b);
for the packets for which the egress next hop selection operation is indicated, performing the egress next hop and a further link aggregation group member selection operations, wherein the further link aggregation group member selection operation limits forwarding of the packets that arrive from the external ports of the forwarding device (100) to active link aggregation group members local to the egress packet processor (102b); and
storing in memory relay entries for next hops connected to a plurality of other packet processors.

## Patentansprüche

1. System für Next-Hop-Skalierung mit Verbindungsaggregation, wobei das System eine Paketweiterleitungsvorrichtung (100) umfasst, die aufweist:
einen Eingangspaketprozessor (102a), der konfiguriert ist zum:
Durchführen eines Vorgangs zur Auswahl von Verbindungsaggregationsgruppenmitgliedern für Pakete, die von externen Ports der Paketweiterleitungsvorrichtung (100) ankommen und einen nächsten Hop aufweisen, der mit einer Verbindungsaggregationsgruppe assoziiert ist,
Angeben für Pakete, die einen nächsten Hop auf einem anderen Paketprozessor aufweisen, dass ein Vorgang zur Auswahl eines nächsten Ausgangs-Hops erforderlich ist, und
Weitergeben der angegebenen Pakete an einen Ausgangspaketprozessor (102b);
wobei der Ausgangspaketprozessor (102b) konfiguriert ist zum:
Durchführen für die Pakete, für welche der Vorgang zur Auswahl des nächsten Ausgangs-Hops angegeben wird, des Vorgangs zur Auswahl des nächstens Ausgangs-Hops und eines weiteren Vorgangs zur Auswahl von Verbindungsaggregationsgruppenmitgliedern, und
Beschränken durch den weiteren Vorgang zur Auswahl von Verbindungsaggregationsgruppenmitgliedern des Weiterleitens der Pakete, die von den externen Ports der Weiterleitungsvorrichtung (100) ankommen, auf ein lokales aktives Verbindungsaggregationsgruppenmitglied an den Ausgangspaketprozessor (102b); und
Speicher (108), der mit jedem Eingangs- und Ausgangspaketprozessor (102a, 102b) assoziiert und so konfiguriert ist, dass er Weitergabeeinträge für nächste Hops speichert, die mit einer Mehrzahl von anderen Paketprozessoren verbunden sind.

2. System nach Anspruch 1, wobei der mit jedem Eingangs- oder Ausgangspaketprozessor (102a, 102b) assoziierte Speicher (108) ferner zum Speichern eines einzelnen Weitergabeeintrags für jeden der Mehrzahl von anderen Paketprozessoren konfiguriert ist.

3. System nach Anspruch 1, wobei ein Empfang eines Pakets, das einem Weitergabeeintrag (108) entspricht, der in einem Speicher (108) gespeichert ist, der mit dem Eingangspaketprozessor (102a) assoziiert ist, den Ausgangspaketprozessor (102a) zum Durchführen einer Suche nach einem nächsten Ausgangs-Hop auslöst.

4. System nach Anspruch 1, wobei die Weitergabeeinträge keine MAC-Adressen für Hosts speichern, die mit der Mehrzahl von anderen Paketprozessoren verbunden sind.

5. System nach Anspruch 1, wobei der mit jedem Eingangs- oder Ausgangspaketprozessor (102a, 12b) assoziierte Speicher (108) ferner so konfiguriert ist, dass er nur MAC-Adressen für nächste Hops speichert, die direkt mit dem Eingangs- oder Ausgangspaketprozessor (102a, 12b) verbunden sind, derart dass Next-Hop-Anbindungen für alle Hosts unter Speichern verteilt sind, die mit allen Paketprozessoren assoziiert sind.

6. System nach Anspruch 1, wobei der mit jedem Eingangs- und Ausgangspaketprozessor (102a, 12b) assoziierte Speicher Next-Hop-Anbindungen für reale und virtuelle Hosts (200, 202, 204, 206) speichert.

7. Verfahren für Next-Hop-Skalierung, wobei das Verfahren die folgenden Schritte umfasst:
Verteilen von Next-Hop-Informationen unter Speichern, die mit verschiedenen Paketprozessoren in einer Paketweiterleitungsvorrichtung (100) mit einem Eingangspaketprozessor (102a) und einem Ausgangspaketprozessor (102b) assoziiert sind, derart dass die mit den verschiedenen Paketprozessoren assoziierten Speichern verschiedene Next-Hop-Anbindungen speichern;
Empfangen von Paketen am Eingangspaketprozessor (102a), wobei die Pakete einen nächsten Hop aufweisen, der mit einer Verbindungsaggregationsgruppe assoziiert ist;
Durchführen eines Vorgangs zur Auswahl von Verbindungsaggregationsgruppenmitgliedern für die Pakete, die von externen Ports der Paketweiterleitungsvorrichtung (100) ankommen;
Angeben für Pakete, die einen nächsten Hop auf einem anderen Paketprozessor aufweisen, dass ein Vorgang zur Auswahl eines nächsten Ausgangs-Hops erforderlich ist, und Weitergeben der angegebenen Pakete an einen Ausgangspaketprozessor (102b);
Durchführen für die Pakete, für welche der Vorgang zur Auswahl des nächsten Ausgangs-Hops angegeben wird, des Vorgangs zur Auswahl des nächstens Ausgangs-Hops und eines weiteren Vorgangs zur Auswahl von Verbindungsaggregationsgruppenmitgliedern, wobei der weitere Vorgang zur Auswahl von Verbindungsaggregationsgruppenmitgliedern das Weiterleiten der Pakete, die von den externen Ports der Weiterleitungsvorrichtung (100) ankommen, auf ein lokales aktives Verbindungsaggregationsgruppenmitglied an den Ausgangspaketprozessor (102b) beschränkt; und
Speichern von Weitergabeeinträgen für nächste Hops, die mit einer Mehrzahl von anderen Paketprozessoren verbunden sind, in einem Speicher (108), der mit jedem Eingangs- und Ausgangspaketprozessor (102a, 102b) assoziiert ist.

8. Verfahren nach Anspruch 7, ferner umfassend den folgenden Schritt:
Speichern eines einzelnen Weitergabeeintrags für jeden der Mehrzahl von anderen Paketprozessoren im Speicher (108), der mit jedem Eingangs- oder Ausgangspaketprozessor (102a, 102b) assoziiert ist.

9. Verfahren nach Anspruch 7, ferner umfassend die folgenden Schritte:
Empfangen eines Pakets, das einem Weitergabeeintrag entspricht, der in einem Speicher (108) gespeichert ist, der mit dem Eingangspaketprozessor (102a) assoziiert ist; und
Durchführen in Reaktion auf das Empfangen des Pakets einer Suche nach einem nächsten Ausgangs-Hop am Ausgangspaketprozessor (102b).

10. Verfahren nach Anspruch 8, wobei die Weitergabeeinträge keine MAC-Adressen für Hosts speichern, die mit der Mehrzahl von anderen Paketprozessoren verbunden sind.

11. Verfahren nach Anspruch 7, wobei der mit jedem Eingangs- oder Ausgangspaketprozessor (102a, 102b) assoziierte Speicher (108) nur MAC-Adressen für nächste Hops speichert, die direkt mit dem Eingangs- und Ausgangspaketprozessor (102a, 102b) verbunden sind, derart dass Next-Hop-Anbindungen für alle Hosts unter Speichern verteilt werden, die mit allen Paketprozessoren assoziiert sind.

12. Computerlesbares Medium, das ausführbare Anweisungen darauf gespeichert aufweist, die bei Ausführung durch einen Prozessor eines Computers den Computer zum Ausführen von Schritten steuern, die umfassen:
Empfangen von Paketen an einem Eingangspaketprozessor (102a), wobei die Pakete einen nächsten Hop aufweisen, der mit einer Verbindungsaggregationsgruppe assoziiert ist;
Durchführen eines Vorgangs zur Auswahl von Verbindungsaggregationsgruppenmitgliedern für die Pakete, die von externen Ports der Paketweiterleitungsvorrichtung (100) ankommen;
Angeben für Pakete, die einen nächsten Hop auf einem anderen Paketprozessor aufweisen, dass ein Vorgang zur Auswahl eines nächsten Ausgangs-Hops erforderlich ist, und Weitergeben der angegebenen Pakete an einen Ausgangspaketprozessor (102b);
Durchführen für die Pakete, für welche der Vorgang zur Auswahl des nächsten Ausgangs-Hops angegeben wird, des Vorgangs zur Auswahl des nächstens Ausgangs-Hops und eines weiteren Vorgangs zur Auswahl von Verbindungsaggregationsgruppenmitgliedern, wobei der weitere Vorgang zur Auswahl von Verbindungsaggregationsgruppenmitgliedern das Weiterleiten der Pakete, die von den externen Ports der Weiterleitungsvorrichtung (100) ankommen, auf lokale aktive Verbindungsaggregationsgruppenmitglieder an den Ausgangspaketprozessor (102b) beschränkt; und
Speichern von Weitergabeeinträgen für nächste Hops, die mit einer Mehrzahl von anderen Paketprozessoren assoziiert sind, im Speicher.

## Revendications

1. Système pour une mise à l'échelle de saut suivant avec une agrégation de liens, le système comprenant un dispositif de réacheminement de paquets (100) comprenant :
un processeur de paquets d'entrée (102a) configuré pour :
effectuer une opération de sélection d'élément de groupe d'agrégation de liens pour les paquets qui arrivent à partir de ports externes du dispositif de réacheminement de paquets (100) et qui ont un saut suivant associé à un groupe d'agrégation de liens,
indiquer, pour les paquets qui ont un saut suivant sur un processeur de paquets différent, qu'une opération de sélection de saut suivant de sortie est nécessaire, et
relayer les paquets indiqués vers un processeur de paquets de sortie (102b) ;
le processeur de paquets de sortie (102b) étant configuré pour :
pour les paquets pour lesquels l'opération de sélection de saut suivant de sortie est indiquée, effectuer l'opération de sélection de saut suivant de sortie et une opération de sélection d'élément de groupe d'agrégation de liens supplémentaire, et
limiter, par l'intermédiaire de l'opération de sélection d'élément de groupe d'agrégation de liens supplémentaire, le réacheminement des paquets qui arrivent à partir des ports externes du dispositif de réacheminement (100) vers un élément de groupe d'agrégation de liens actif local du processeur de paquets de sortie (102b) ; et
une mémoire (108) associée à chaque processeur de paquets d'entrée ou de sortie (102a, 102b) configurée pour mémoriser les entrées de relais pour les sauts suivants connectés à une pluralité d'autres processeurs de paquets.

2. Système selon la revendication 1, dans lequel la mémoire (108) associée à chaque processeur de paquets d'entrée ou de sortie (102a, 102b) est en outre configurée pour mémoriser une entrée de relais unique pour chacun de la pluralité d'autres processeurs de paquets.

3. Système selon la revendication 1, dans lequel la réception d'un paquet qui correspond à une entrée de relais mémorisée dans une mémoire (108) associée au processeur de paquets d'entrée (102a) déclenche le processeur de paquets de sortie (102a) pour effectuer une recherche de saut suivant de sortie.

4. Système selon la revendication 1, dans lequel les entrées de relais ne mémorisent pas d'adresses MAC pour les hôtes connectés à la pluralité d'autres processeurs de paquets.

5. Système selon la revendication 1, dans lequel la mémoire (108) associée à chaque processeur de paquets d'entrée ou de sortie (102a, 12b) est en outre configurée pour mémoriser des adresses MAC uniquement pour les sauts suivants qui sont directement connectés au processeur de paquets d'entrée ou de sortie (102a, 12b), de sorte que les liaisons de saut suivant pour tous les hôtes soient distribuées entre les mémoires associées à tous les processeurs de paquets.

6. Système selon la revendication 1, dans lequel la mémoire associée à chaque processeur de paquets d'entrée ou de sortie (102a, 12b) mémorise les liaisons de saut suivant pour les hôtes réels et virtuels (200, 202, 204, 206).

7. Procédé pour une mise à l'échelle de saut suivant, le procédé comprenant les étapes :
de distribution des informations de saut suivant entre les mémoires associées à différents processeurs de paquets dans un dispositif de réacheminement de paquets (100) comprenant un processeur de paquets d'entrée (102a) et un processeur de paquets de sortie (102b), de sorte que les mémoires associées aux différents processeurs de paquets mémorisent différentes liaisons de saut suivant ;
de réception de paquets au niveau du processeur de paquets d'entrée (102a), les paquets ayant un saut suivant associé à un groupe d'agrégation de liens ;
d'exécution d'une opération de sélection d'élément de groupe d'agrégation de liens pour les paquets qui arrivent à partir de ports externes du dispositif de réacheminement de paquets (100) ;
pour les paquets qui ont un saut suivant sur un processeur de paquets différent, d'indication qu'une opération de sélection de saut suivant de sortie est nécessaire et de relayage des paquets indiqués vers un processeur de paquets de sortie (102b) ;
pour les paquets pour lesquels l'opération de sélection de saut suivant de sortie est indiquée, d'exécution de l'opération de sélection de saut suivant de sortie et d'une opération de sélection d'élément de groupe d'agrégation de liens supplémentaire, dans lequel l'opération de sélection d'élément de groupe d'agrégation de liens supplémentaire limite le réacheminement des paquets qui arrivent à partir des ports externes du dispositif de réacheminement (100) vers un élément de groupe d'agrégation de liens actif local du processeur de paquets de sortie (102b) ; et
de mémorisation, dans une mémoire (108) associée à chaque processeur de paquets d'entrée ou de sortie (102a, 102b), des entrées de relais pour les sauts suivants connectés à une pluralité d'autres processeurs de paquets.

8. Procédé selon la revendication 7, comprenant en outre l'étape :
de mémorisation, dans la mémoire (108) associée à chaque processeur de paquets d'entrée ou de sortie (102a, 102b), d'une entrée de relais unique pour chacun de la pluralité d'autres processeurs de paquets.

9. Procédé selon la revendication 7, comprenant en outre les étapes :
de réception d'un paquet qui correspond à une entrée de relais mémorisée dans une mémoire (108) associée au processeur de paquets d'entrée (102a) ; et
en réponse à la réception du paquet, d'exécution, au niveau du processeur de paquets de sortie (102b), d'une recherche de saut suivant de sortie.

10. Procédé selon la revendication 8, dans lequel les entrées de relais ne mémorisent pas d'adresses MAC pour les hôtes connectés à la pluralité d'autres processeurs de paquets.

11. Procédé selon la revendication 7, dans lequel la mémoire (108) associée à chaque processeur de paquets d'entrée ou de sortie (102a, 102b) mémorise des adresses MAC uniquement pour les sauts suivants qui sont directement connectés au processeur de paquets d'entrée ou de sortie (102a, 102b) de sorte que les liaisons de saut suivant pour tous les hôtes soient distribuées entre les mémoires associées à tous les processeurs de paquets.

12. Support lisible par un ordinateur sur lequel sont mémorisées des instructions exécutables qui, lorsqu'elles sont exécutées par un processeur d'un ordinateur, commandent l'ordinateur pour effectuer les étapes comprenant :
la réception de paquets au niveau d'un processeur de paquets d'entrée (102a), les paquets ayant un saut suivant associé à un groupe d'agrégation de liens ;
l'exécution d'une opération de sélection d'élément de groupe d'agrégation de liens pour les paquets qui arrivent à partir de ports externes du dispositif de réacheminement de paquets (100) ;
pour les paquets qui ont un saut suivant sur un processeur de paquets différent, l'indication qu'une opération de sélection de saut suivant de sortie est nécessaire et le relayage des paquets indiqués vers un processeur de paquets de sortie (102b) ;
pour les paquets pour lesquels l'opération de sélection de saut suivant de sortie est indiquée, l'exécution de l'opération de sélection de saut suivant de sortie et d'une opération de sélection d'élément de groupe d'agrégation de liens supplémentaire, dans lequel l'opération de sélection d'élément de groupe d'agrégation de liens supplémentaire limite le réacheminement des paquets qui arrivent à partir des ports externes du dispositif de réacheminement (100) vers les éléments de groupe d'agrégation de liens actifs locaux du processeur de paquets de sortie (102b) ; et
la mémorisation, dans une mémoire, des entrées de relais pour les sauts suivants connectés à une pluralité d'autres processeurs de paquets.
